# EUROPÄISCHE PATENTSCHRIFT

(11) **EP 1 493 319 B1**
(45) Veröffentlichungstag und Bekanntmachung des Hinweises auf die Patenterteilung: **12.07.2006**
(21) Anmeldenummer: 04102952.1
(22) Anmeldetag: 25.06.2004
(51) Int. Cl.: A01D 45/02

(54) **Einzugs- und Pflückeinrichtung**
Gathering and picking device
Dispositif de prise et de cueillette

(30) Priorität: 01.07.2003 DE 10329409
(43) Veröffentlichungstag der Anmeldung: 05.01.2005
(73) Patentinhaber: Maschinenfabrik Kemper GmbH & Co. KG, 48973 Stadtlohn (DE)
(72) Erfinder: Rickert, Clemens, 48703, Stadtlohn (DE); Bongert, Dirk, 48703, Stadtlohn (DE)
(74) Vertreter: Holst, Sönke

(56) Entgegenhaltungen:
- EP-A- 0 091 635
- EP-A- 0 653 152
- DE-A- 3 029 424
- US-A- 2 337 592

## Beschreibung

Die Erfindung betrifft eine Einzugs- und Pflückeinrichtung mit einem Pflückspalt, einer Pflückwalze und einem Stängelhäcksler, wobei im Erntebetrieb die Pflückwalze die Pflanzen in den Pflückspalt hineinzieht, sodass Fruchtstände abgetrennt werden, und der Stängelhäcksler die Stängel der Pflanzen zerteilt, sowie mit einer ersten Überlastkupplung, die in den Antriebsstrang der Pflückwalze eingefügt ist und das Antriebsdrehmoment der Pflückwalze begrenzt, und einer zweiten Überlastkupplung, die in den Antriebsstrang des Stängelhäckslers eingefügt ist und das Antriebsdrehmoment des Stängelhäckslers begrenzt.

Pflücker finden in der landwirtschaftlichen Erntetechnik Verwendung, um die Fruchtstände von Pflanzen von den übrigen Teilen der Pflanzen zu trennen. Derartige Pflücker weisen in der Regel zwei Pflückwalzen auf, zwischen denen der Pflanzenstängel eingezogen wird. Gelegentlich wird auch nur eine Pflückwalze verwendet, die mit einer festen Wand zusammenwirkt. Die Pflückwalze oder -walzen zieht bzw. ziehen die Pflanze durch einen Pflückspalt hindurch, dessen Abmessungen enger als die des Fruchtstandes sind. Dadurch wird der Fruchtstand, beispielsweise ein Maiskolben, von den Resten der Pflanze getrennt und kann separat verarbeitet werden.

Zum Fördern der Pflanzen entlang des Pflückspalts bzw. zum Abtransport der abgetrennten Fruchtstände nach hinten, wo letztere von einer Querförderschnecke erfasst und einem Schrägförderer eines den Pflücker über das Feld bewegenden Mähdreschers zugeführt werden, sind bei konventionellen Pflückern Ketten vorgesehen. Für diese Aufgabe wurde auch die Verwendung von rotierenden Elementen vorgeschlagen (DE 199 59 281 A). Weiterhin ist es gebräuchlich, die Pflanzenstängel durch einen Schlägelhäcksler zu zerkleinern, der sich unterhalb der Pflückwalzen befindet.

Bei der Ernte können Überlastsituationen auftreten, beispielsweise, wenn eine übermäßige Menge an Pflanzen aufgenommen wurde oder sich ein Stein zwischen zwei zusammenwirkenden Pflückwalzen verklemmt. Um in derartigen Fällen Beschädigungen der mit den Pflanzenteilen zusammenwirkenden Elemente des Pflückers oder ihrer Antriebselemente zu vermeiden, ist die Verwendung von Überlastkupplungen bekannt.

In der EP 0 653 152 A ist zwischen einer Hauptantriebswelle, die mehrere Einzugs- und Pflückeinheiten antreibt, und jeder der einzelnen Einzugs- und Pflückeinheiten jeweils eine Rutschkupplung angeordnet. Die Rutschkupplung sichert somit die Pflückwalzen, die Einzugsketten und das Häckselmesser ab. Eine derartige Anordnung ist auch in der DE 30 29 424 A offenbart. Bei diesen Pflückern ist als nachteilig anzusehen, dass die Dimensionierung der Überlastkupplung kritisch ist. Wird sie zu klein gewählt, kann sie bereits bei hoher, aber noch nicht übermäßiger Belastung ansprechen. Wird sie zu groß gewählt, kann ein Element des Pflückers bereits beschädigt werden, obwohl das Gesamtdrehmoment noch nicht zum Abschalten hinreicht.

Die FR 2 805 963 A schlägt vor, in den Antriebsstrang der Pflückwalzen eine Überlastkupplung einzufügen. Eine Überlastsicherung für die anderen Elemente des Pflückers wird dort nicht beschrieben. Die DE 198 15 571 beschreibt einen Pflücker, bei dem in den Antriebsstrang des Häckslers bzw. zweier benachbarter, gemeinsam angetriebener Häcksler ein Drehmomentsensor eingefügt ist. Hier wird somit nur der Häcksler abgesichert. Eine Absicherung nur eines Teils der angetriebenen Elemente des Pflückers hat den Nachteil, dass nicht abgesicherte Elemente beschädigt werden können.

Schließlich wird in einem gattungsgemäßen Prospekt der Fa. Bourgoin mit dem Titel "cueilleurs compatibles", Druckvermerk B 315 844 323 000 14, beschrieben, dass die dort dargestellten, mit Kettenförderern ausgestatteten Pflücker mit zahlreichen mechanischen Sicherungen ausgestattet sind: einem Nockenbegrenzer an der Schnecke, einem Begrenzer mit Schaltklauen an den Elementen des Pflückers und einem Nockenbegrenzer am Häcksler. Die räumliche Anordnung und der Aufbau der Überlastsicherungen wird nicht im Einzelnen offenbart.

Die der Erfindung zu Grunde liegende Aufgabe wird darin gesehen, eine gegenüber dem Stand der Technik verbesserte Pflückeinrichtung bereitzustellen.

Diese Aufgabe wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Es wird vorgeschlagen, die erste Überlastkupplung, die die Pflückwalze oder Pflückwalzen absichert, und die zweite Überlastkupplung, welche den Stängelhäcksler absichert, innerhalb eines gemeinsamen Gehäuses anzubringen. Dadurch erzielt man eine platzsparende Anordnung. Die beiden Überlastkupplungen können in einem gemeinsam genutzten Ölbad laufen. Eine der Überlastsicherungen kann auch ein Einzugselement zum Einführen der Pflanzen in den Pflückspalt, bei dem es sich um eine konventionelle Einzugskette oder ein um die Hochachse rotierendes Einzugselement handeln kann, absichern. Alternativ wird dafür eine dritte Überlastsicherung verwendet.

Es bietet sich an, die beiden Überlastkupplungen gemeinsam auf einer Antriebswelle anzuordnen. Die Antriebswelle wird über geeignete Zwischenantriebselemente durch eine sich quer über die Breite des Pflückers erstreckende Hauptantriebswelle angetrieben. Die beiden Überlastkupplungen sind koaxial zueinander an der Antriebswelle angebracht, beispielsweise aufgeschoben.

Es kann sich zu Wartungs- oder Reparaturzwecken als notwendig erweisen, Arbeiten an den Überlastkupplungen vorzunehmen oder diese auszutauschen. Es bietet sich an, das Getriebegehäuse mit einer verschließbaren Öffnung zu versehen, die sich in der Nähe der Überlastkupplungen befindet. Die Öffnung erlaubt in geöffnetem Zustand einen leichten Zugang zu den Überlastkupplungen. Sie kann sich insbesondere an der in Fahrtrichtung vorlaufenden Fläche des Getriebegehäuses befinden. Die Antriebswelle erstreckt sich in dieser Ausführungsform vorzugsweise ebenfalls in der Fahrtrichtung und erlaubt ein Abziehen der Überlastkupplungen nach vorn.

In den Zeichnungen ist ein nachfolgend näher beschriebenes Ausführungsbeispiel der Erfindung dargestellt. Es zeigt:
- Fig. 1: eine Draufsicht auf eine Einzugs- und Pflückeinrichtung einer Erntemaschine,

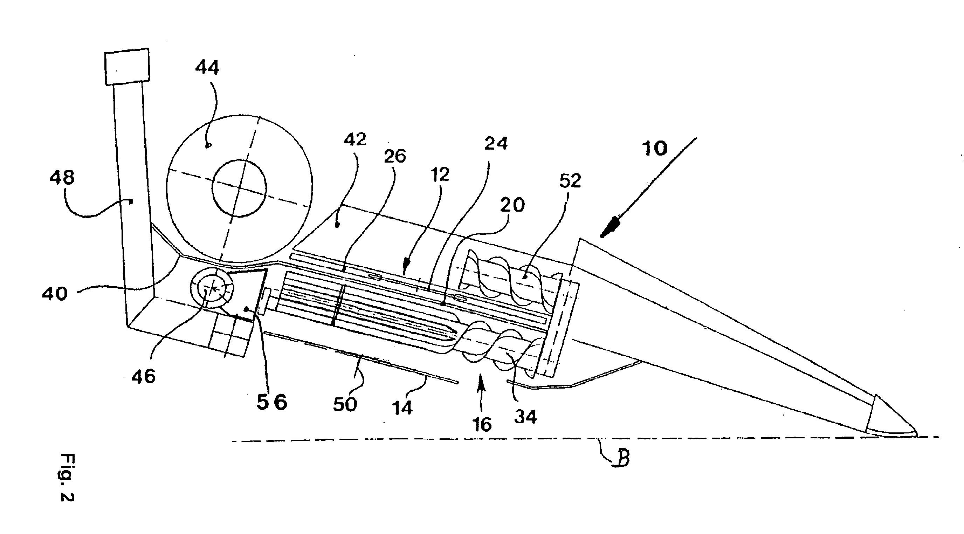

- Fig. 2: eine Seitenansicht der Einzugs- und Pflückeinrichtung aus Figur 1,
- Fig. 3: eine Explosionszeichnung des ersten Getriebegehäuses, der Pflückwalzen und des zweiten Getriebegehäuses für das Einzugselement und den Stängelhäcksler, und
- Fig. 4: eine Explosionszeichnung der im ersten Getriebegehäuse angeordneten Antriebselemente der Einzugs- und Pflückeinrichtung.

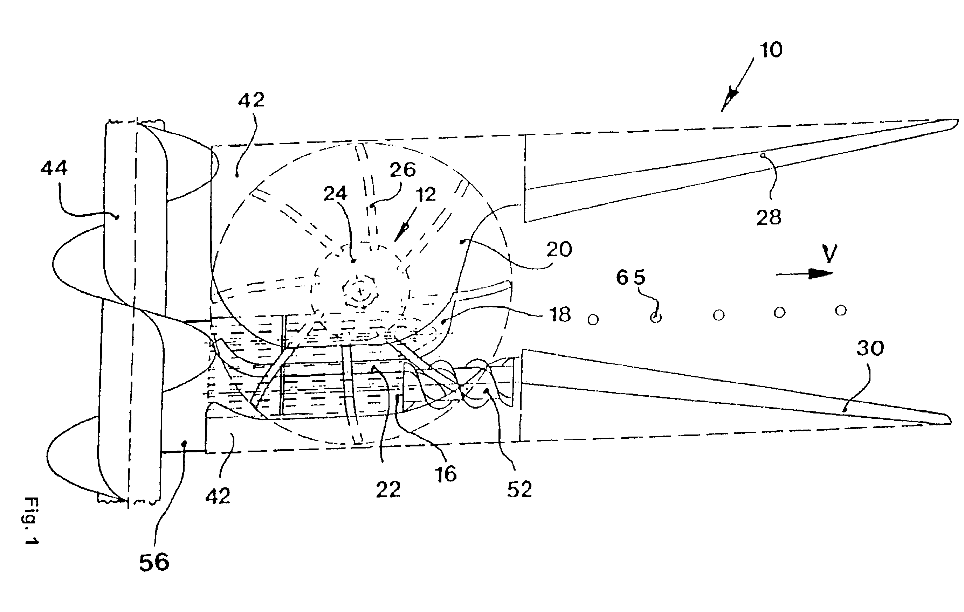

In der Figur 1 ist eine Einzugs- und Pflückeinrichtung 10 einer Erntegutbergungsvorrichtung in Draufsicht dargestellt, die ein Einzugselement 12, das zum Erfassen und Einziehen der zu erntenden Pflanze dient, einen drehbaren und vorzugsweise abschaltbaren Stängelhäcksler 14, eine erste Pflückwalze 16 und eine zweite Pflückwalze 18 aufweist, die unterhalb eines in einem Abstreifblech 20 eingebrachten Pflückspalts 22 angeordnet sind. Anzumerken ist, dass sich im Folgenden Richtungsangaben, wie vorn, hinten und seitlich, auf die Fahrtrichtung V der Einzugs- und Pflückeinrichtung 10 beziehen.

Das Einzugselement 12 ist um eine etwa vertikal verlaufende, jedoch leicht nach vorn geneigte Achse drehbar angeordnet und wird durch einen Antrieb in Rotation versetzt, in Figur 1 im Uhrzeigersinn. Das Einzugselement 12 ist oberhalb des Abstreifblechs 20 angeordnet. Das Einzugselement 12 besteht in seinem grundsätzlichen Aufbau aus einer zentralen Scheibe 24 mit über ihren Umfang verteilten, sich im Wesentlichen radial erstreckenden Fingern 26, die in der Ebene der Scheibe 24 entgegen der Drehrichtung, also nachlaufend gekrümmt sind. Dem Einzugselement 12 sind in Vorwärtsbewegungsrichtung V der Erntegutbergungsvorrichtung Stängelteiler 28, 30 vorgeordnet. Auch ist die in Vorwärtsbewegungsrichtung vorlaufende Kante des Abstreifblechs 20 derart gekrümmt, dass die Stängel der Pflanzen 65 in den Wirkbereich des Einzugselements 12 gedrückt werden.

Anhand der Figur 1 ist die Wirkungsweise des Einzugselements 12 gut erkennbar. Ein Stängel einer auf dem Feld stehenden Pflanze 65 gerät - nachdem er gegebenenfalls durch die Stängelteiler 28, 30 und/oder die vorlaufende Kante des Abstreifblechs 20 in Richtung auf den Pflückspalt 22 verbogen wurde - mit einem Finger 26 des Einzugselements 12 in Berührung. Der Stängel wird von der vorlaufenden Oberfläche des Fingers 26 mitgeführt und aufgrund der nachlaufenden und daher abweisenden Krümmung des Fingers 26 nach außen gedrückt. Auf diese Weise wird der Stängel der Pflanze 65 durch den Finger 26 in den Pflückspalt 22 transportiert, der sich zumindest näherungsweise parallel zur Vorwärtsbewegungsrichtung V erstreckt und zwischen der ersten Pflückwalze 16 und dem Einzugselement 12 in das Abstreifblech 20 eingebracht ist.

Die erste Pflückwalze 16 ist seitlich neben dem Einzugselement 12 angeordnet und leicht nach vorn und unten geneigt. Sie ist, betrachtet man die seitliche Richtung, parallel zur Vorwärtsbewegungsrichtung V orientiert. Im vorderen, bezüglich der Bewegungsrichtung der Pflanzen 65 stromaufwärts liegenden Bereich der ersten Pflückwalze 16 befindet sich ein Schneckenförderer 34, der in Zusammenwirken mit dem Einzugselement 12 den Stängel der Pflanze 65 in den Pflückspalt 22 einzieht.

Oberhalb des eingangsseitigen Endes des Pflückspalts 22 und oberhalb des Einzugselements 12 ist ein Förderelement in Form einer Förderschnecke 52 angeordnet. Durch das Zusammenspiel der beiden Förderschnecken 34, 52 und des Fingers 28 wird die Pflanze 65 sicher gehalten und geradlinig in den Pflückspalt 22 und zwischen die Pflückwalzen 16, 18 geführt.

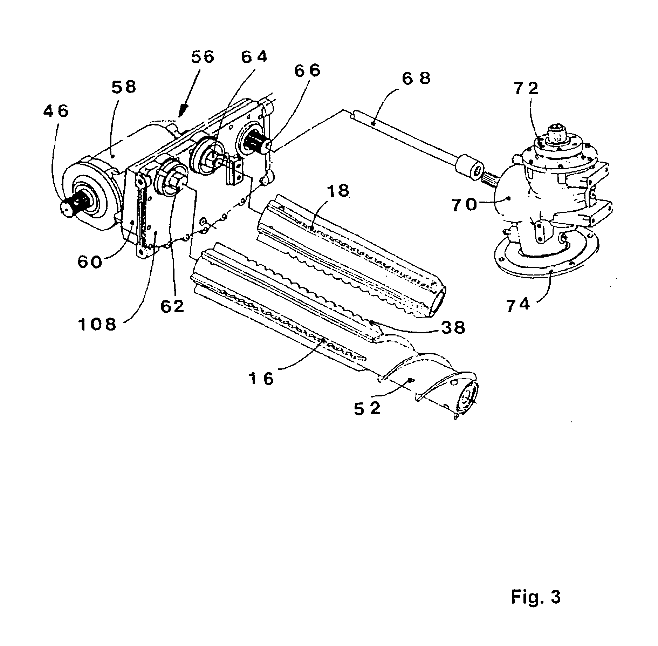

Der Stängel der Pflanze 65 gelangt in den wirksamen Pflückbereich der zweiten Pflückwalze 18, deren vordere Spitze (bezüglich der Vorwärtsbewegungsrichtung V betrachtet) ebenfalls vor der Drehachse des Einzugselements 12 liegt. Die zweite Pflückwalze 18 ist parallel zur ersten Pflückwalze 16 orientiert und zwischen letzterer und der Drehachse des Einzugselementes 12 angeordnet, wobei der zwischen der ersten Pflückwalze 16 und der zweiten Pflückwalze 18 definierte Spalt vertikal unterhalb des Pflückspalts 22 angeordnet ist. Die erste Pflückwalze 16 und die zweite Pflückwalze 18 sind über ihre gesamte Länge in an sich bekannter Weise mit axial verlaufenden, nach außen überstehenden Mitnehmern 38 versehen, wie sie am besten in der Figur 3 erkennbar sind. Die Achsen der Pflückwalzen 16 und 18 verlaufen parallel zueinander. Die zweite Pflückwalze 18 und die erste Pflückwalze 16 ziehen den Stängel der Pflanze 65 nach unten ein. Dabei dient das Abstreifblech 20 beidseits des Pflückspalts 22 zum Abstreifen von Fruchtständen der Pflanze 65.

Die durch die Pflückeinrichtung abgetrennten Fruchtstände 66 der Pflanzen 65, wie Maiskolben, Fruchtstände von Sonnenblumen usw. werden durch das Einzugselement 12 in einen an der Rückseite der Einzugs- und Pflückeinrichtung 10 angeordneten Trog 40 gefördert, wobei eine Abdeckung 42 beidseits des Pflückspalts 22 einen zum Trog 40 führenden Kanal definiert, durch den die Fruchtstände der Pflanzen 65 gefördert werden. Eine oberhalb des Trogs 40 angeordnete, quer zur Vorwärtsfahrtrichtung orientierte Förderschnecke 44 transportiert die Fruchtstände zu einem Erntefahrzeug (z. B. Mähdrescher oder Feldhäcksler) oder auf einen Anhänger. Unterhalb des Trogs 40 ist eine sich quer über die Breite der gesamten Maschine erstreckende Hauptantriebswelle 46 vorgesehen, die zum Antrieb der beiden Pflückwalzen 16, 18, des Stängelhäckslers 14, der Förderschnecke 52 und des Einzugselements 12 der Einzugs- und Pflückeinrichtungen 10 dient. Die Hauptantriebswelle 46 steht mit dem Motor eines die Erntegutbergungsvorrichtung tragenden Fahrzeugs in Antriebsverbindung. Ein Rahmen 48 trägt die Einzugs- und Pflückeinrichtungen 10 der Erntegutbergungsvorrichtung, die alle durch die Hauptantriebwelle 46 angetrieben werden.

Die Reste der Pflanze 65, die von den Pflückwalzen 16, 18 nach unten abtransportiert werden, gelangen in den Wirkungsbereich des rotierenden, vierarmigen Stängelhäckslers 14 und werden durch dieses in einzelne Stücke zerteilt. Der Stängelhäcksler 14 rotiert um eine vertikal verlaufende Drehachse 50, die bezüglich der Vorwärtsbewegungsrichtung V zwischen der Drehachse des Einzugselements 12 und der Förderschnecke 44 angeordnet ist.

Die Figur 3 zeigt die mechanische Anordnung der Antriebselemente der Einzugs- und Pflückeinrichtung 10. Die Hauptantriebswelle 46 ist in Abschnitte untergliedert, von denen sich einer durch den rückwärtigen Teil 58 eines ersten Getriebegehäuses 56 erstreckt. Ein vorderer Teil 60 des ersten Getriebegehäuses 56 enthält an seiner Vorderseite zwei sich in Fahrtrichtung V nach vorn erstreckende Wellenstummel 62, 64 zur Aufnahme und zum Antrieb der Pflückwalzen 16, 18. Der vordere Teil 60 weist an seiner Vorderseite weiterhin einen Wellenstummel 66 auf, der mit einer Welle 68 verbunden ist. Die Welle 68 erstreckt sich in Fahrtrichtung V nach vorn und ist mit einem zweiten Getriebegehäuse 70 verbunden. Das zweite Getriebegehäuse 70 enthält die Elemente zum Antrieb des Einzugselements 12, welches an einem Flansch 72 angebracht wird, der sich an der Oberseite des zweiten Getriebegehäuses 70 befindet. An seiner Unterseite hat das zweite Getriebegehäuse 70 einen anderen Flansch 74, an dem der Stängelhäcksler 14 befestigt wird. Im zweiten Getriebegehäuse 70, das sich - wie das erste Getriebegehäuse 56 - durch geeignete Verbindungen am Rahmen 48 abstützt, befinden sich Zahnradgetriebe oder dgl., die gewünschte Drehzahlen und - richtungen an den Flanschen 72, 74 bereitstellen.

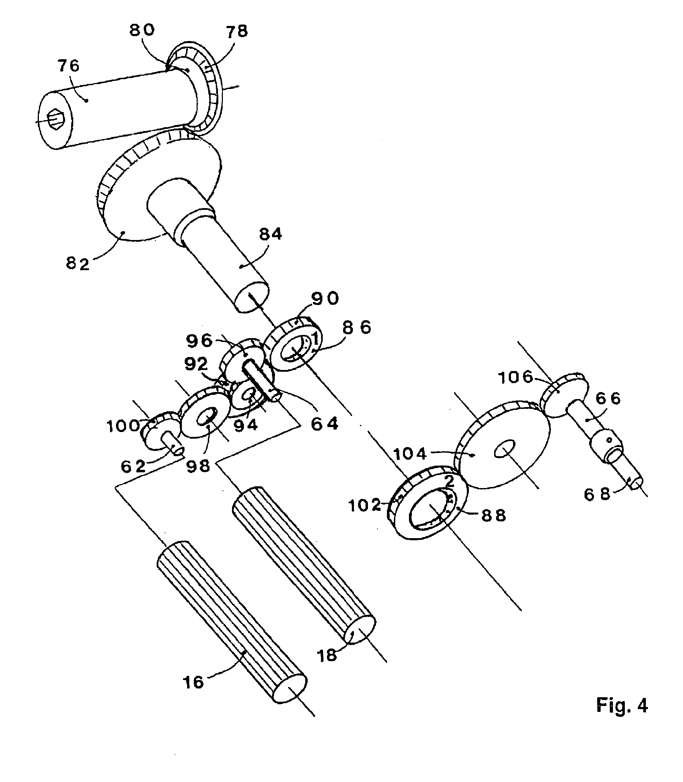

Die Figur 4 zeigt die im ersten Getriebegehäuse 56 enthaltenen Elemente in einer Explosionsansicht. Die Hauptantriebswelle 46 erstreckt sich durch ein darauf aufschiebbares Kupplungselement 76. Die Drehmomentübertragung erfolgt durch das nicht-kreisförmige Innenprofil des Kupplungselements 76, das dem Außenprofil des es durchdringenden Abschnitts der Hauptantriebswelle 46 entspricht. An seinem in Figur 4 rechts eingezeichneten Ende ist das Kupplungselement 76 mit einem ersten Kegelzahnrad 78 verbunden. Zwischen dem Kupplungselement 76 und dem ersten Kegelzahnrad 78 befindet sich eine elastische Kupplung, die insbesondere beim Anfahren Kraftspitzen aufnehmen kann. Das Kegelzahnrad 78 kämmt mit einem zweiten Kegelzahnrad 82, das eine sich etwa in Fahrtrichtung V nach vorn erstreckende Antriebswelle 84 antreibt.

Auf die Antriebswelle 84 sind hintereinander eine erste Überlastkupplung 86 und eine zweite Überlastkupplung 88 aufschiebbar und durch geeignete Mittel in axialer Richtung der Antriebswelle 84 festsetzbar. Die Überlastkupplungen 86, 88 sind an sich bekannte Nockenschaltkupplungen, die federkraftbeaufschlagte Nocken und damit zusammenwirkende Flächen aufweisen und an ihrem Außenumfang mit Verzahnungen 90, 102 versehen. Eine Drehmomentübertragung von der Antriebswelle 84 auf die Verzahnungen 90, 102 und umgekehrt findet somit nur dann statt, wenn ein definiertes Grenzdrehmoment nicht überschritten wird. Anstelle der Nockenschaltkupplungen können beliebige andere Typen von Überlastkupplungen verwendet werden, die bei Überschreitung eines bestimmten Drehmoments eine Drehmomentübertragung unterbinden, z. B. Rutschkupplungen oder Sternratschen. Geeignete Überlastkupplungen sind auch in den Druckschriften DE 31 51 486 C, DE 34 18 558 C, DE 41 37 829 A, DE 195 38 351 C, DE 196 11 622 C, DE 197 15 269 C und DE 197 44 154 C offenbart.

Die äußere Verzahnung 90 der Überlastkupplung 86 kämmt mit einem Zahnrad 92, mit dem ein Zahnrad 94 koaxial und drehfest verbunden ist, welches mit einem weiteren Zahnrad 96 kämmt, das mit dem Wellenstummel 64 für die zweite Pflückwalze 18 verbunden ist. Das Zahnrad 94 überträgt sein Antriebsmoment über weitere Zahnräder 98, 100 auf den Wellenstummel 62 für die erste Pflückwalze 16. Anzumerken ist, dass die erste Pflückwalze 16 die Förderschnecke 52 über ein an ihrer Stirnseite angeordnetes Getriebe 54 antreibt.

Analog kämmt die Verzahnung 102 der zweiten Überlastkupplung 88 mit einem Zahnrad 104, welches über ein Zahnrad 106 die Welle 68 antreibt.

Die beschriebenen Elemente des Antriebsstrangs der Pflückwalzen 16, 18 und der Welle 68 einschließlich der Überlastkupplungen 86, 88 befinden sich innerhalb des ersten Getriebegehäuses 56. Das Kupplungselement 76 mit dem Kegelzahnrad 78 und der elastischen Kupplung 80 und das zweite Kegelzahnrad 82 befinden sich im rückwärtigen Teil 58 des ersten Getriebegehäuses 56, während sich die verbleibenden Elemente im vorderen Teil 60 befinden. Der rückwärtige Teil 58 ist zylindrisch und an die Form der von ihm eingeschlossenen Elemente angepasst.

Der vordere Teil 60 des ersten Getriebegehäuses 56 weist einen vorderen, abnehmbaren Deckel 108 auf. Nach Ablassen des Getriebeöls, das sich im ersten Getriebegehäuse 56 zur Schmierung der darin befindlichen Antriebselemente befindet, kann der Deckel 108 abgenommen werden, nachdem zu seiner Befestigung dienende Schrauben abgeschraubt wurden. Dann liegt das Innere des vorderen Teils 60 frei und die Überlastkupplungen 86, 88 sind zu Einstell-, Wartungs- oder Reparaturarbeiten frei zugänglich und können nach dem Lösen der Mittel zum Festsetzen der Überlastkupplungen 86, 88 auf der Antriebswelle 84 davon abgenommen werden. Das Getriebegehäuse 56 bleibt dabei an Ort und Stelle. Man könnte an der Vorderseite der Antriebswelle 84 auch eine weitere Öffnung in den Deckel 108 einbringen, die durch einen separaten Verschluss verschlossen wird und einen Zugang zu den Überlastkupplungen 86, 88 ermöglicht.

## Patentansprüche

1. Einzugs- und Pflückeinrichtung (10), mit einem Pflückspalt (22), einer Pflückwalze (16, 18) und einem Stängelhäcksler (14), wobei im Erntebetrieb die Pflückwalze (16, 18) die Pflanzen (65) in den Pflückspalt (22) hineinzieht, sodass Fruchtstände abgetrennt werden, und der Stängelhäcksler (14) die Stängel der Pflanzen (65) zerteilt, sowie mit einer ersten Überlastkupplung (86), die in den Antriebsstrang der Pflückwalze (16, 18) eingefügt ist und das Antriebsdrehmoment der Pflückwalze (16, 18) begrenzt, und einer zweiten Überlastkupplung (88), die in den Antriebsstrang des Stängelhäckslers (14) eingefügt ist und das Antriebsdrehmoment des Stängelhäckslers (14) begrenzt, **dadurch gekennzeichnet, dass** die erste Überlastkupplung (86) und die zweite Überlastkupplung (88) innerhalb eines gemeinsamen Getriebegehäuses (56) angeordnet sind.

2. Einzugs- und Pflückeinrichtung (10) nach Anspruch 1, **dadurch gekennzeichnet, dass** die erste Überlastkupplung (86) und die zweite Überlastkupplung (88) koaxial zueinander auf einer gemeinsamen Antriebswelle (84) angeordnet sind.

3. Einzugs- und Pflückeinrichtung (10) nach Anspruch 1 oder 2, **dadurch gekennzeichnet, dass** das Getriebegehäuse (56) mit einer verschließbaren Öffnung versehen ist, die im geöffneten Zustand einen Zugang zu den und/oder einen Ausbau der Überlastkupplungen (86, 88) ohne einen Ausbau des Getriebegehäuses (56) ermöglicht.

4. Einzugs- und Pflückeinrichtung (10) nach Anspruch 3, **dadurch gekennzeichnet, dass** die Öffnung des Getriebegehäuses (56) sich an dessen in Fahrtrichtung (V) vorlaufender Fläche befindet.

## Claims

1. Gathering and picking device (10), having a picking gap (22), a picking roller (16, 18) and a stalk chopper (14), in harvesting operation the picking roller (16, 18) drawing the plants (65) into the picking gap (22) so that the infructescence is separated and the stalk chopper (14) comminutes the stalks of the plants (65) and also having a first overload coupling (86) which is fitted into the drive path of the picking roller (16, 18) and delimits the drive torque of the picking roller (16, 18), and a second overload coupling (88) which is fitted into the drive path of the stalk chopper (14) and delimits the drive torque of the stalk chopper (14), **characterised in that** the first overload coupling (86) and the second overload coupling (88) are disposed within a common transmission housing (56).

2. Gathering and picking device (10) according to claim 1, **characterised in that** the first overload coupling (86) and the second overload coupling (88) are disposed coaxially relative to each other on a common drive shaft (84).

3. Gathering and picking device (10) according to claim 1 or 2, **characterised in that** the transmission housing (56) is provided with a closeable opening which, in the opened state, makes possible access to and/or dismantling of the overload couplings (86, 88) without dismantling of the transmission housing (56).

4. Gathering and picking device (10) according to claim 3, **characterised in that** the opening of the transmission housing (56) is situated on the leading face thereof in the direction of travel (V).

## Revendications

1. Dispositif de cueillage et ramassage (10), comportant une fente de cueillage (22), un rouleau de cueillage (16, 18) et un hacheur de tiges (14), sachant que, en cours de service, le rouleau de cueillage (16, 18) tire les végétaux (65) dans la fente de cueillage (22), de telle sorte que les végétaux sur pied sont sectionnés, et le hacheur de tiges (14) fractionne les tiges des végétaux (65), et comportant une premier embrayage anti-surcharge (86), qui est intégré dans la ligne de transmission du rouleau de cueillage (16, 18) et limite le couple de rotation d'entraînement du rouleau de cueillage (16, 18), et un deuxième embrayage anti-surcharge (88) qui est intégré dans la ligne de transmission du hacheur de tiges (14) et limite le couple de rotation d'entraînement du hacheur de tiges (14), **caractérisé en ce que** le premier embrayage anti-surcharge (86) et le deuxième embrayage anti-surcharge (88) sont agencés à l'intérieur d'un carter d'engrenage (56) commun.

2. Dispositif de cueillage et ramassage (10) selon la revendication 1, **caractérisé en ce que** le premier embrayage anti-surcharge (86) et le deuxième embrayage anti-surcharge (88) sont agencés coaxialement l'un par rapport à l'autre sur un arbre d'entraînement (84) commun.

3. Dispositif de cueillage et ramassage (10) selon la revendication 1 ou 2, **caractérisé en ce que** le carter d'engrenage (56) comporte une ouverture pouvant être fermée, laquelle, en position ouverte, permet un accès vers les embrayages anti-surcharge (86, 88) et/ou un démontage de ceux-ci sans un démontage du carter d'engrenage (56).

4. Dispositif de cueillage et ramassage (10) selon la revendication 3, **caractérisé en ce que** l'ouverture du carter d'engrenage (56) se situe au niveau de la surface antérieure de celui-ci par référence au sens de déplacement (V).
